# EUROPEAN PATENT SPECIFICATION

(11) **EP 2 554 234 B1**
(45) Date of publication and mention of the grant of the patent: **02.11.2016**
(21) Application number: 11765669.4
(22) Date of filing: 30.03.2011
(51) Int. Cl.: B01D 39/20, B01D 53/86, B01D 53/94, B01J 35/04, F01N 3/02, F01N 3/022, B01J 23/63, B01J 23/34, B01J 23/00, B01J 37/03, B01D 46/24

(54) **HONEYCOMB FILTER**
WABENSTRUKTURFILTER
FILTRE EN NID D'ABEILLES

(30) Priority: 31.03.2010 JP 2010081901
(43) Date of publication of application: 06.02.2013
(73) Proprietor: NGK Insulators, Ltd., Nagoya-City, Aichi-ken 467-8530 (JP)
(72) Inventor: MIZUTANI, Takashi, Nagoya-city Aichi-ken 467-8530 (JP); NAGATA, Koji, Nagoya-city Aichi-ken 467-8530 (JP); MIYAIRI, Yukio, Nagoya-city Aichi-ken 467-8530 (JP)
(74) Representative: Naylor, Matthew John
(86) International application number: PCT/JP2011/058079
(87) International publication number: WO 2011/125769

(56) References cited:
- WO-A1-2008/117559
- JP-A- 2009 148 742
- JP-A- 2009 233 587
- JP-A- 2009 255 055

## Description

### Technical Field

The present invention relates to a honeycomb filter.

### Background Art

A honeycomb filter is proposed in which the cross-sectional area of a cell on the inlet side is larger than the cross-sectional area of a cell on the outlet side (see, for example, Patent Document 1). In this honeycomb filter, the cells having a large cross-sectional area have a round corner, and the ratio of an intersection of partitions to the thickness of a partition is optimized. This can prevent the openings of the inlet cells from being blocked and allows high strength to be further maintained. One proposed honeycomb filter includes a porous partition portion, in which a cell that is open at one end and closed at the other end and a cell that is closed at one end and open at the other end are alternately disposed, and a layer for trapping and removing particulate matter (hereinafter also referred to as PM) contained in an exhaust gas formed on the partition portion (see, for example, Patent Document 2). This honeycomb filter can trap PM using the trapping layer with low pressure loss.

Patent Document 1: JP 2005-270969 A

Patent Document 2: JP 2004-216226 A Document WO2008/117559 discloses a honeycomb comprising large and small cells where the thickness of the partition wall between adjacent large cells is greater than the thickness between a large and a small cell.

### Disclosure of Invention

In some cases, the honeycomb filter described in Patent Document 1 has a trapping layer. In such a case, for example, after an unusually excessive amount of PM is deposited, regeneration treatment to remove the PM by combustion may cause a defect, such as a crack in the trapping layer or detachment of the trapping layer, because of thermal stress, resulting in low trapping efficiency. Thus, it is desirable to improve the durability of the trapping layer. A defect in the trapping layer may cause PM deposition on a partition portion and increase pressure loss. An increase in pressure loss may result in a decreased mileage. Thus, it is desirable to decrease pressure loss.

In view of the situations described above, it is a principal object of the present invention to provide a honeycomb filter that has decreased pressure loss and has a trapping layer having improved durability.

In order to achieve the principal object, the present invention has employed the following means.

A honeycomb filter according to an aspect of the present invention includes
a plurality of porous partition portions disposed between a large cell and another large cell and between a large cell and a small cell, the small cell being open at one end and closed at the other end and serving as a flow path of a fluid, the large cells being closed at one end and open at another end and having a larger opening area than the small cell, the partition portions being formed such that the large cells and the small cells are alternately disposed; and
a trapping layer for trapping and removing solid components contained in a fluid, the trapping layer being disposed on each of the partition portions and containing particle groups having an average particle size smaller than the average pore size of a corresponding one of the partition portions,
wherein the thickness of a trapping layer disposed on a partition portion between a large cell and another large cell is 60% or more and 95% or less of the thickness of a trapping layer disposed on a partition portion between a large cell and a small cell, and the partition thickness ratio of the thickness of a partition portion between a large cell and another large cell to the thickness of a partition portion between a large cell and a small cell is 1.0 or more and 1.8 or less.

The honeycomb filter can have decreased pressure loss and have a trapping layer having improved durability. A reason for this is assumed as described below. For example, in the case that the inlet cells have a larger structure than the outlet cells, it is believed that combustion removal treatment (hereinafter also referred to as regeneration treatment) of trapped solid components (hereinafter also referred to as PM) causes stress on a corner of an inlet cell, concentrating stress on a partition between a large cell and another large cell and on a trapping layer disposed on the partition. For example, in general, after an unusually excessive amount of PM is deposited on a honeycomb filter, regeneration treatment may cause a crack in a trapping layer disposed on a partition because of stress concentration. The crack may cause a portion of the trapping layer to be detached, affecting PM trap. This is probably caused by tensile stress generated on the top surface (inlet cell side) of the trapping layer. In the present invention, it is assumed that, by decreasing the thickness of a trapping layer on a partition between a large cell and another large cell, the detachment of the trapping layer, which results from thermal stress in abnormal heat generation after excess PM deposition, can be prevented. In a honeycomb filter according to an aspect of the present invention, the large cells may be adjacent to the small cells, and the large cells may be adjacent to each other.

In a honeycomb filter according to an aspect of the present invention, the thickness of a trapping layer disposed on a partition portion between a large cell and another large cell (hereinafter also referred to as between large-large cells) is 60% or more and 95% or less of the thickness of a trapping layer disposed on a partition portion between a large cell and a small cell (hereinafter also referred to as between large-small cells). When this percentage is 60% or more, it is easy to trap PM on the trapping layers. When this percentage is 95% or less, the pressure loss can be decreased. More preferably, the thickness of a trapping layer disposed on a partition portion between a large cell and another large cell is 65% or more and 80% or less of the thickness of a trapping layer disposed on a partition portion between a large cell and a small cell.

In a honeycomb filter according to an aspect of the present invention, the thickness of a trapping layer disposed on a partition portion between a large cell and a small cell (between large-small cells) may be 10 µm or more and 80 µm or less. At a trapping layer thickness of 10 µm or more, it is easy to trap PM. A trapping layer thickness of 80 µm or less results in a decrease in the permeation resistance of a partition and a decrease in pressure loss. The thickness of a trapping layer between large-small cells is preferably 20 µm or more and 60 µm or less, more preferably 30 µm or more and 50 µm or less.

In a honeycomb filter according to an aspect of the present invention, the partition portions may be formed such that the thickness of a partition portion between a large cell and another large cell is equal to or larger than the thickness of a partition portion between a large cell and a small cell. This is more preferred because a fluid can flow smoothly from the beginning of PM trap, and PM is deposited on partition portions between large-small cells and then on partition portions between large-large cells. The partition portions may be formed such that the partition thickness ratio of the thickness of a partition portion between a large cell and another large cell to the thickness of a partition portion between a large cell and a small cell is 1.0 or more and 1.8 or less. At a partition thickness ratio of 1.0 or more, a large thickness of a partition portion between large-large cells can result in decreased displacement and increased heat capacity. A partition thickness ratio of 1.8 or less can result in a smaller partition between large-large cells, which is difficult for a fluid to pass through, and increased areas of the large cells and the small cells, which result in decreased pressure loss.

In a honeycomb filter according to an aspect of the present invention, the cell width ratio of the width of a large cell to the width of a small cell is 1.2 or more and 2.0 or less. The cell width ratio is preferably 1.1 or more and 1.6 or less.

In a honeycomb filter according to an aspect of the present invention, the trapping layers may be formed by supplying an inorganic material that is a raw material for the trapping layers to the large cells using a gas as a transport medium. Thus, transportation with a gas can be utilized to relatively easily control the thickness of the trapping layers.

In a honeycomb filter according to an aspect of the present invention, the partition portions may contain one or more inorganic materials selected from cordierite, SiC, mullite, aluminum titanate, alumina, silicon nitride, SIALON, zirconium phosphate, zirconia, titania, and silica. The trapping layers may contain one or more inorganic materials selected from cordierite, SiC, mullite, aluminum titanate, alumina, silicon nitride, SIALON, zirconium phosphate, zirconia, titania, and silica.

A honeycomb filter according to an aspect of the present invention may be formed by joining two or more honeycomb segments with a bonding layer. Each of the honeycomb segments has the partition portion and the trapping layer.

In a honeycomb filter according to an aspect of the present invention, at least one of the partition portion and the trapping layer may be loaded with a catalyst. The catalyst can facilitate the removal of components contained in a fluid, such as the removal of trapped solid components by combustion.

In a honeycomb filter according to an aspect of the present invention, the large cells may have an octagonal cross section perpendicular to the fluid flow direction, and the small cells may have a tetragonal cross section perpendicular to the fluid flow direction.

### Brief Description of Drawings

Fig. 1 is a schematic explanatory view of an example of the structure of a honeycomb filter 20.
Fig. 2 is an explanatory view of cells, partitions, and trapping layers.
Fig. 3 is an explanatory view of a method for calculating the thickness of a trapping layer on the basis of SEM observation.
Fig. 4 is an explanatory view of measuring points at which the thickness of a trapping layer 24 is measured.
Fig. 5 is a schematic explanatory view of an example of the structure of a honeycomb filter 40.
Fig. 6 shows the measurements of regeneration threshold (g/L) as a function of the trapping layer thickness ratio E/D.
Fig. 7 shows the measurements of PM deposition pressure loss (kPa) as a function of the trapping layer thickness ratio E/D.
Fig. 8 shows the measurements of regeneration threshold (g/L) as a function of the partition thickness ratio B/A.
Fig. 9 shows the measurements of PM deposition pressure loss (kPa) as a function of the partition thickness ratio B/A.

### Best Modes for Carrying Out the Invention

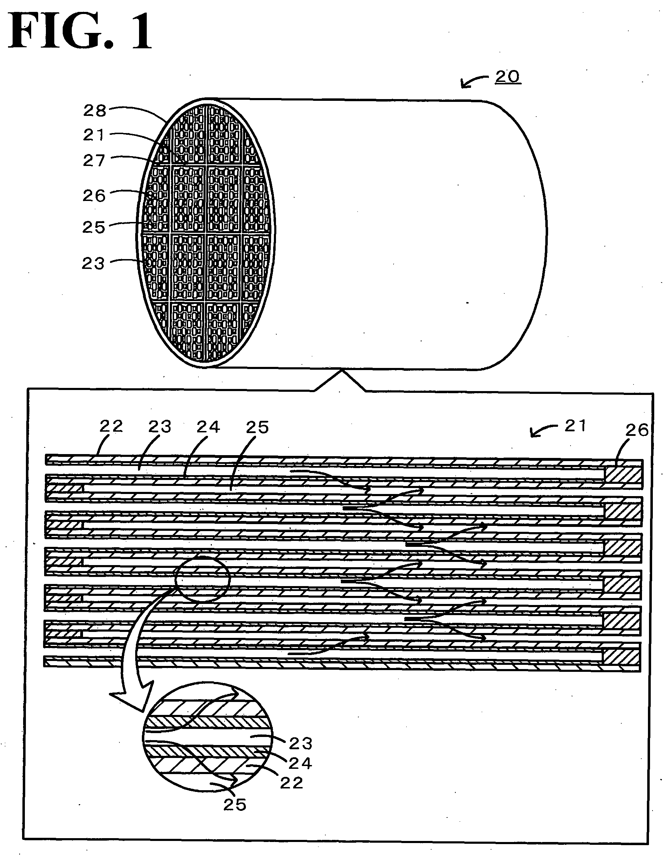

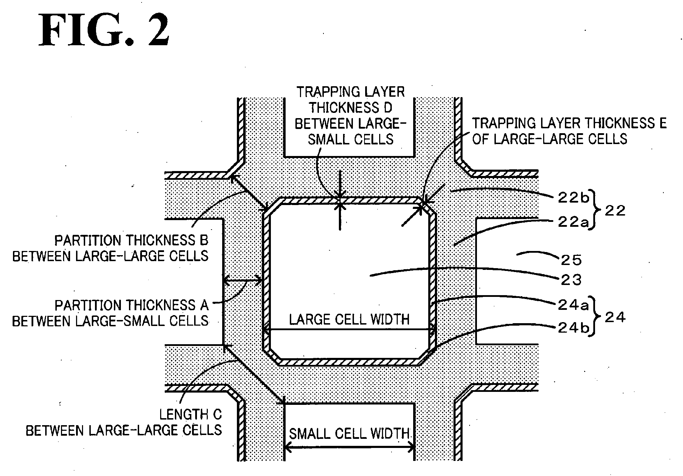

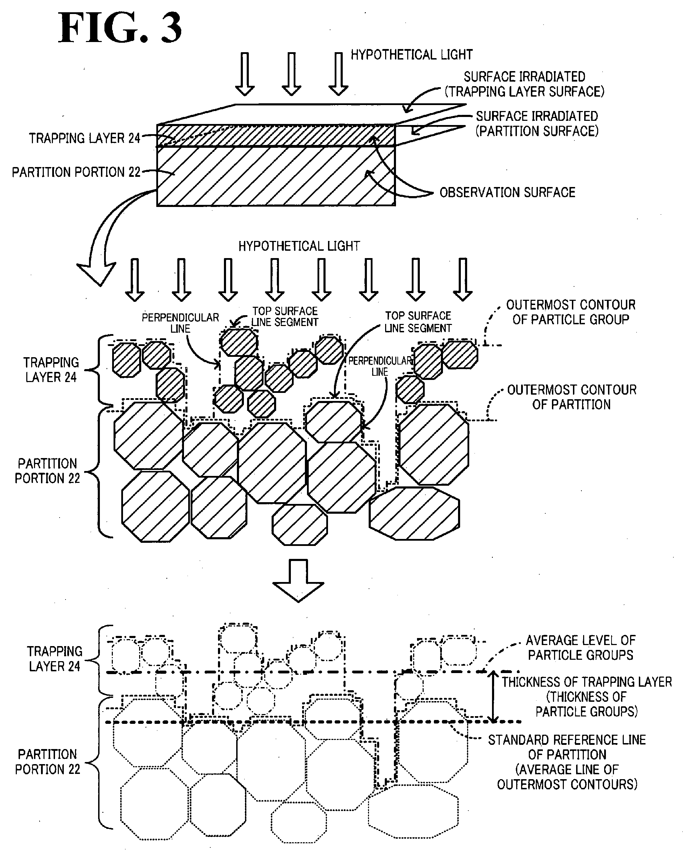

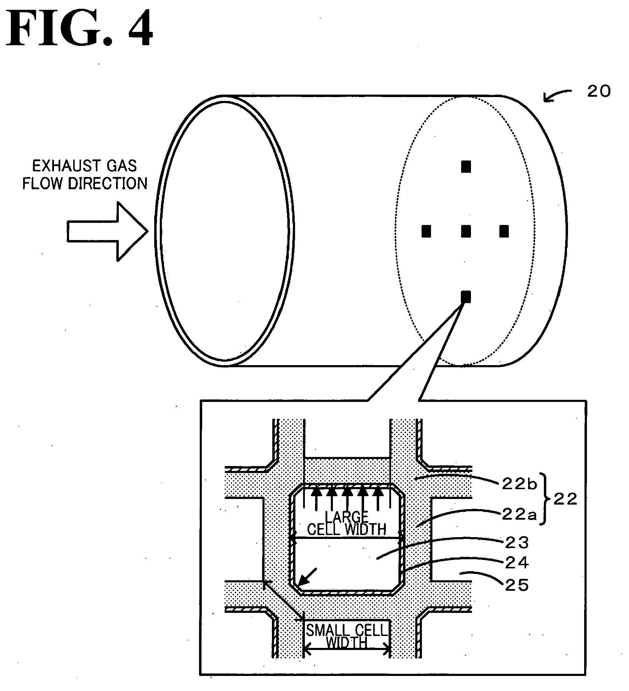

A honeycomb filter according to one embodiment of the present invention will be described below with reference to the accompanying drawings. Fig. 1 is a schematic explanatory view of the structure of a honeycomb filter 20 according to an embodiment of the present invention. Fig. 2 is an explanatory view of cells, partitions, and trapping layers. Fig. 3 is an explanatory view of a method for calculating the thickness of a trapping layer on the basis of SEM observation. Fig. 4 is an explanatory view of measuring points at which the thickness of a trapping layer 24 is measured. As illustrated in Fig. 1, the honeycomb filter 20 according to the present embodiment includes two or more honeycomb segments 21 joined together with a bonding layer 27 and an outer protective portion 28 disposed around the honeycomb segments 21. Each of the honeycomb segments 21 includes a partition portion 22.

The honeycomb filter 20 includes small cells 25 and large cells 23. The small cells 25 are open at one end and closed at the other end and serve as a fluid flow path. The large cells 23 are closed at one end and open at the other end and have a larger opening area than the small cells 25. In the honeycomb filter 20, the large cells 23 are inlet cells for an exhaust gas fluid, and the small cells 25 are outlet cells for the exhaust gas. A trapping layer 24 is formed on an inner wall of each of the large cells 23. The honeycomb filter 20 includes a plurality of porous partition portions 22 formed between a large cell 23 and another large cell 23 (between large-large cells) and between a large cell 23 and a small cell 25 (between large-small cells), and a trapping layer 24 for trapping and removing solid components (PM) contained in an exhaust gas, the trapping layer being disposed on each of the partition portions 22 and containing particle groups having an average particle size smaller than the average pore size of a corresponding one of the partition portions 22. In the honeycomb filter 20, the partition portions 22 are formed such that a large cell 23 that is open at one end and closed at the other end and a small cell 23 that is closed at one end and open at the other end are alternately disposed. In the honeycomb filter 20, the large cells 23 are adjacent to the small cells 25, and the large cells 23 are adjacent to each other. In the honeycomb filter 20, the partition thickness between large-small cells is referred to as a partition 22a between large-small cells, and the partition thickness between large-large cells is referred to as a partition 22b between large-large cells. These partitions are collectively referred to as the partition portions 22. A trapping layer between large-small cells is referred to as a trapping layer 24a between large-small cells, and a trapping layer between large-large cells is referred to as a trapping layer 24b between large-large cells. These trapping layers are collectively referred to as trapping layers 24. In the honeycomb filter 20, an exhaust gas enters an inlet small cell 23, passes through the trapping layer 24 and the partition portion 22, and is exhausted from an outlet large cell 23, during which PM in the exhaust gas is trapped on the trapping layer 24. The average particle size of the particle groups constituting the trapping layer 24 is a mean value measured by observing the trapping layer 24 with a scanning electron microscope (SEM) and measuring the individual particles of the trapping layer 24 in an image obtained. The average particle size of raw material particles is the median size (D50) measured with a laser diffraction/scattering particle size distribution analyzer using water as a dispersion medium.

The honeycomb filter 20 may have any external shape and may be cylindrical, quadrangular prismatic, cylindroid, or hexagonal columnar. The honeycomb segments 21 may have any external shape, preferably have a plane that is easy to join, and may have a square columnar (quadrangular prismatic, hexagonal columnar, or the like) with a polygonal cross section. The cross section of the cells may be polygonal, such as triangular, tetragonal, hexagonal, or octagonal, circular, or streamlined, such as elliptical, or combination thereof. For example, the large cells 23 may have an octagonal cross section perpendicular to the exhaust gas flow direction, and the small cells 25 may have a tetragonal cross section perpendicular to the exhaust gas flow direction. In Figs. 1 and 2, the honeycomb filter 20 is cylindrical, each of the honeycomb segments 21 is rectangular columnar, each of the large cells 23 is octagonal, and each of the small cells 25 is rectangular.

As illustrated in Fig. 2, in the partition portions 22, the partition thickness A between large-small cells, the partition thickness B between large-large cells, the partition length C between large-large cells, the width of the large cells 23, and the width of the small cells 25 have specified values. The cell width ratio of the width of the large cells 23 to the width of the small cells 25 may be 1.05 or more and 2.2 or less. The cell width ratio is preferably 1.1 or more and 1.8 or less, more preferably 1.1 or more and 1.4 or less. The thickness of a partition 22b between large-large cells is more preferably larger than the thickness of a partition 22a between large-small cells because, owing to their rigidity, the partitions themselves can effectively suppress displacement resulting from thermal stress. A cell width ratio of more than 2.2 results in an excessively large partition in a region through which little exhaust gas passes, resulting in decreased inlet and outlet cell areas and increased pressure loss. A cell width ratio of more than 1.1 results in decreased displacement because of a large thickness of a partition 22b between large-large cells and high heat capacity because of a thick partition, which can decrease the maximum temperature in abnormal PM combustion relative to the amount of PM deposition and increase the crack generation threshold relative to the amount of PM deposition. The partition thickness A between large-small cells is preferably 100 µm or more and 600 µm or less, more preferably 200 µm or more and 450 µm or less. The partition thickness B between large-large cells is preferably 100 µm or more and 600 µm or less, more preferably 200 µm or more and 600 µm or less. The partition length C between large-large cells is preferably 350 µm or more and 1200 µm or less, more preferably 500 µm or more and 700 µm or less. The large cell width is preferably 1000 µm or more and 2000 µm or less, more preferably 1200 µm or more and 1600 µm or less. The small cell width is preferably 600 µm or more and 1400 µm or less, more preferably 800 µm or more and 1100 µm or less.

The partition portion 22 is porous and may contain one or more inorganic materials selected from cordierite, Si-bonded SiC, recrystallized SiC, aluminum titanate, mullite, silicon nitride, SIALON, zirconium phosphate, zirconia, titania, alumina, and silica. Among these, cordierite, Si-bonded SiC, and recrystallized SiC are preferred. The partition portion 22 preferably has a porosity of 30% by volume or more and 85% by volume or less, more preferably 35% by volume or more and 65% by volume or less. The partition portion 22 preferably has an average pore size of 10 µm or more and 60 µm or less. The posositu and th average pore size is measured by a mercury intrusion method. The partition portion 22 having such a porosity, an average pore size, and a thickness allows an exhaust gas to easily pass through the partition portion 22 and PM to be easily trapped and removed.

The trapping layers 24 are formed such that the thickness of a trapping layer 24b between large-large cells disposed on a partition 22b between large-large cells is 60% or more and 95% or less of the thickness of a trapping layer 24a between large-small cells disposed on a partition 22a between large-small cells. An exhaust gas does not initially pass through a partition 22b between large-large cells. With the deposition of PM on a partition 22a between large-small cells, however, the permeation resistance of the partition 22a increases, and the exhaust gas may also pass through a partition between large-large cells while the exhaust gas flows from the large cells to the small cells. When the thickness of a trapping layer 24b between large-large cells is 60% or more of the thickness of a trapping layer 24a between large-small cells, the trapping layers 24 can sufficiently trap PM, preventing PM from entering pores of the partition portions 22 and preventing an increase in pressure loss. When the thickness of a trapping layer 24b between large-large cells is 95% or less of the thickness of a trapping layer 24a between large-small cells, for example, the occurrence of a defect, such as detachment of the trapping layer 24, is decreased during combustion after excess PM deposition, and an increase in pressure loss during subsequent PM deposition can be reduced. The thickness of a trapping layer 24b between large-large cells is preferably 80% or more and 95% or less of the thickness of a trapping layer 24a between large-small cells. The thickness of a trapping layer 24a between large-small cells is preferably 10 µm or more and 80 µm or less, more preferably 20 µm or more and 60 µm or less, still more preferably 30 µm or more and 50 µm or less. When the thickness of a trapping layer 24a between large-small cells is 10 µm or more, it is easy to trap PM. When the thickness of the trapping layer 24a is 80 µm or less, this results in decreased permeation resistance of the partition and decreased pressure loss. The thickness of a trapping layer 24b between large-large cells is smaller than the thickness of a trapping layer 24a between large-small cells, and is preferably 6 µm or more and 76 µm or less, more preferably 12 µm or more and 57 µm or less, still more preferably 18 µm or more and 48 µm or less. When the thickness of a trapping layer 24a between large-small cells is 6 µm or more and 76 µm or less, it is easy to trap PM.

The trapping layer 24 preferably has an average pore size of 0.2 µm or more and 10 µm or less and a porosity of 40% by volume or more and 95% by volume or less, and the average size of particles constituting the trapping layer is preferably 0.5 µm or more and 15 µm or less. An average pore size of 0.2 µm or more results in the prevention of an excessive initial pressure loss in the absence of PM deposition. An average pore size of 10 µm or less results in an improvement in trapping efficiency, the prevention of PM entering the pores of the partition portion 22 through the trapping layer 24, and the prevention of the reduction in the effect of decreasing pressure loss during PM deposition. A porosity of 40% by volume or more results in the prevention of an excessive initial pressure loss in the absence of PM deposition. A porosity of 95% by volume or less results in the formation of a surface layer serving as a durable trapping layer 24. When the average size of particles constituting the trapping layer is 0.5 µm or more, a space between the particles constituting the trapping layer can be sufficiently provided, thus ensuring high permeability of the trapping layer and preventing a sudden increase in pressure loss. When the average size of particles constituting the trapping layer is 15 µm or less, there are a sufficient number of points of contact between the particles, ensuring a sufficient bond strength between the particles and a high peel strength of the trapping layer. Thus, it is possible to maintain high PM trapping efficiency, prevent a sudden increase in pressure loss immediately after the start of PM trapping, decrease pressure loss during PM deposition, and impart durability to the trapping layer. The trapping layer 24 may contain one or more inorganic materials selected from cordierite, SiC, mullite, aluminum titanate, alumina, silicon nitride, SIALON, zirconium phosphate, zirconia, titania, and silica. Preferably, the trapping layer 24 is formed of the material of the partition portion 22. More preferably, the trapping layer 24 contains 70% by weight or more ceramic or metallic inorganic fiber. The fiber facilitates PM trapping. The inorganic fiber of the trapping layer 24 may contain one or more materials selected from aluminosilicate, alumina, silica, zirconia, ceria, and mullite.

Here, a method for measuring the thickness of the trapping layer 24 will be described below with reference to Fig. 3. The thickness of the trapping layer 24, in other words, the thickness of the particle groups constituting the trapping layer is determined in the following manner. The thickness of the trapping layer is determined by embedding a partition substrate of the honeycomb filter 20 in a resin and polishing the resin to prepare a sample for observation, observing the sample with a scanning electron microscope (SEM), and analyzing an image obtained. First, the sample for observation is prepared by cutting and polishing such that a cross section perpendicular to the fluid flow direction serves as an observation surface. The observation surface of the sample for observation prepared is photographed at measuring points described below in a visual field of approximately 500 µm x 500 µm at a SEM magnification in the range of 100 to 500. The outermost contour of a partition is then hypothetically drawn on an image obtained. The outermost contour of a partition is a line showing the outline of the partition and refers to a projector obtained by irradiating a partition surface (a surface to be irradiated; see the top in Fig. 3) with hypothetical parallel light in the direction perpendicular to the partition surface (see the middle in Fig. 3). The outermost contour of a partition is composed of line segments corresponding to a plurality of top surfaces of the partition at different levels irradiated with hypothetical light and perpendicular lines each connecting line segments corresponding to adjacent top surfaces of the partition at different levels. The line segments corresponding to the top surfaces of the partition are drawn at "5% resolution", in which, for example, asperities having a length of 5 µm or less are disregarded with respect to a line segment having a length of 100 µm. This prevents the occurrence of too many line segments in the horizontal direction. In the drawing of the outermost contour of a partition, the presence of a trapping layer is disregarded. Subsequently, in the same manner as in the outermost contour of a partition, the outermost contour of the particle groups constituting a trapping layer is hypothetically drawn. The outermost contour of the particle groups is a line showing the outline of the trapping layer and refers to a projector obtained by irradiating a trapping layer surface (a surface to be irradiated; see the top in Fig. 3) with hypothetical parallel light in the direction perpendicular to the trapping layer surface (see the middle in Fig. 3). The outermost contour of the particle groups is composed of line segments corresponding to a plurality of top surfaces of the particle groups at different levels irradiated with hypothetical light and perpendicular lines each connecting line segments corresponding to adjacent top surfaces of the particle groups at different levels. The line segments corresponding to the top surfaces of the particle groups are drawn, for example, at the same "resolution" as in the partition. For a porous trapping layer, in a sample for observation prepared by embedding in a resin and polishing, some particle groups are observed as if they floated in the air. The outermost contour is therefore drawn with the projector obtained by hypothetical light irradiation. Subsequently, the standard reference line of the partition is determined on the basis of the levels and lengths of the line segments of the outermost contour corresponding to the top surfaces of the partition thus drawn. The standard reference line is the average line of the outermost contour of the partition (see the bottom in Fig. 3). In the same manner as in the standard reference line of the partition, the average level of the particle groups is determined on the basis of the levels and lengths of the line segments of the outermost contour corresponding to the top surfaces of the particle groups thus drawn. The average level of the particle groups is the average line of the outermost contour of the particle groups (see the bottom in Fig. 3). The difference (length) between the average level of the particle groups and the standard reference line of the partition is considered to be the thickness of the trapping layer (the thickness of the particle groups) in the image. In this manner, the thickness of a trapping layer can be determined.

The points for measuring the thickness of a trapping layer will be described below. In regeneration treatment, the temperature of a honeycomb filter is greatly increased in the vicinity of the outlet end face. Thus, as illustrated in Fig. 4, the thickness distribution of a trapping layer in a cell is measured in a cross section approximately 10% of the total length of the honeycomb filter upstream from the outlet end face of the honeycomb filter. The thickness distribution of the trapping layer is measured at five points, including the center point in a central region of the cross section and four points located above, below, and to the left and right of the center point. As illustrated in Fig. 4, the thickness of a trapping layer between large-small cells is a mean value of five measurements on each side at evenly spaced intervals. The thickness of a trapping layer between large-large cells is a mean value of measurements at the center of each side. Thus, the thickness of a trapping layer between large-small cells is a mean value of 20 x 5 = 100 measurements, that is, five measurements x four sides = 20 measurements per cell for five cells in the cross section. Likewise, the thickness of a trapping layer between large-large cells is a mean value of 4 x 5 = 20 measurements, that is, one measurement x four sides = four measurements per cell for five cells in the cross section. In this manner, the thickness of a trapping layer (particle groups), that is, the trapping layer 24a between large-small cells or the trapping layer 24b between large-large cells can be determined.

The average pore size and the porosity of the trapping layer 24 are determined by image analysis based on SEM observation. In the same manner as in the thickness of the trapping layer, as illustrated in Fig. 3, images of a cross section of the honeycomb filter 20 are obtained with SEM. A region between the outermost contour of a partition and the outermost contour of particle groups is considered to be a region occupied by a trapping layer (a trapping layer region). In the trapping layer region, a region including the particle groups is referred to as a "particle group region", and a region including no particle group is referred to as a "pore region of the trapping layer". The area of the trapping layer region (trapping layer area) and the area of the particle group region (particle group area) are determined. The porosity of the trapping layer is calculated by dividing the particle group area by the trapping layer area and multiplying the quotient by 100. In the "pore region of the trapping layer", an incircle inscribed in the outermost contours of the particle groups and the partition and the periphery of the particle groups is drawn such that the diameter of the incircle is as large as possible. In the case that a plurality of incircles can be drawn in one "pore region of the trapping layer", for example, in the case of a rectangular pore region having a large aspect ratio, a plurality of incircles as large as possible are drawn such that the pore region is sufficiently filled with the incircles. In the image observation area, the average diameter of the incircles is considered to be the average pore size of the trapping layer. In this manner, the average pore size and the porosity of the trapping layer 24 can be determined.

In the formation of the trapping layer 24, a solvent that is volatilized with time may be contained in the partition portion 22, and the raw material particles of the trapping layer 24 may be supplied to the cell 23 using a gas. In an early stage in which the raw material particles of the trapping layer 24 are started to be deposited on the partition portion 22, most of the raw material particles are deposited on the partition 22a between large-small cells because of its high permeation resistance. As volatile solvent is volatilized with time, however, the permeation resistance gradually decreases, and the raw material particles are also deposited on the partition 22b between large-large cells. Thus, a volatile solvent can be used to easily form the trapping layer 24 in which the trapping layer 24b between large-large cells has a smaller thickness. The concentration of the volatile solvent can be controlled to regulate the vaporization rate and thereby control the amount of deposition of the raw material particles in each partition. Examples of the volatile solvent include organic solvents, such as alcohols, acetone, and benzene, and water. Among these, water is preferred as the volatile solvent. In this manner, the trapping layer 24 can be formed.

The raw material for the trapping layer 24 may be inorganic fiber or inorganic particles. The inorganic fiber may be that described above and preferably has an average particle size of 0.5 µm or more and 8 µm or less and an average length of 100 µm or more and 500 µm or less. The inorganic particles may be particles made of the inorganic material described above. For example, SiC particles or cordierite particles having an average particle size of 0.5 µm or more and 15 µm or less can be used. In this case, the inorganic material of the partition portion 22 is preferably the same as the inorganic material of the trapping layer 24. In the formation of the trapping layer 24, in addition to inorganic fiber or inorganic particles, a binding material may be supplied. The binding material may be selected from sol materials and colloid materials and is preferably colloidal silica. Preferably, the inorganic particles are coated with silica, and the inorganic particles are bound to each other with silica, and the inorganic particles are bound to the material of the partition portion with silica. In the case of an oxide material, such as cordierite or aluminum titanate, the inorganic particles are preferably bound to each other by sintering, and the inorganic particles are preferably bound to the material of the partition portion by sintering. The trapping layer 24 is preferably bonded to the partition portion 22 by forming a layer of the raw material on the partition portion 22 and performing heat treatment. For example, the heat treatment temperature is preferably 650°C or more and 1350°C or less. Heat treatment at a temperature of 650°C or more can ensure a sufficient bonding strength. Heat treatment at a temperature of 1350°C or less can prevent the blockage of pores caused by excessive oxidation of the particles. The trapping layer 24 may be formed on the cell 23 using a slurry containing inorganic particles serving as the raw material of the trapping layer 24.

The bonding layer 27 is a layer for joining the honeycomb segments 21 and may contain inorganic particles, inorganic fiber, and a binding material. The inorganic particles may be particles made of the inorganic material described above and preferably have an average particle size of 0.1 µm or more and 30 µm or less. The inorganic fiber may be that described above and preferably has an average diameter of 0.5 µm or more and 8 µm or less and an average length of 100 µm or more and 500 µm or less. The binding material may be colloidal silica or clay. The bonding layer 27 is preferably formed in the range of 0.5 mm or more and 2 mm or less. The average particle size is the median size (D50) measured with a laser diffraction/scattering particle size distribution analyzer using water as a dispersion medium. The outer protective portion 28 is a layer for protecting the periphery of the honeycomb filter 20 and may contain the inorganic particles, the inorganic fiber, and the binding material described above.

In the honeycomb filter 20, the thermal expansion coefficient of the cells 23 in the longitudinal direction at a temperature in the range of 40°C to 800°C is preferably 6.0 x 10⁻⁶/ °C or less, more preferably 1.0 x 10⁻⁶/°C or less, still more preferably 0.8 x 10⁻⁶/°C or less. At a thermal expansion coefficient of 6.0 x 10⁻⁶/°C or less, thermal stress generated by exposure to a high-temperature exhaust gas can be within tolerance.

The honeycomb filter 20 preferably has a cell pitch of 1.0 mm or more and 2.5 mm or less. The pressure loss during PM deposition decreases with increasing filtration area. The initial pressure loss increases with decreasing cell diameter. Thus, the cell pitch, the cell density, and the thickness of the partition portion 22 may be determined in consideration of trade-offs between initial pressure loss, pressure loss during PM deposition, and PM trapping efficiency.

In the honeycomb filter 20, the partition portion 22 or the trapping layer 24 may contain a catalyst. The catalyst may be at least one of catalysts for promoting the combustion of trapped PM, catalysts for oxidizing unburned gases (HCs, CO, and the like) contained in an exhaust gas, and catalysts for occluding/adsorbing/decomposing NOₓ. The catalyst can increase the efficiency of removing PM, oxidizing unburned gases, or decomposing NOₓ. The catalyst more preferably contains at least one of noble metal elements and transition metal elements. The honeycomb filter 20 may be loaded with another catalyst or a purification material. Among those are a NOₓ storage catalyst containing an alkali metal (such as Li, Na, K, or Cs) or an alkaline-earth metal (such as Ca, Ba, or Sr), at least one rare-earth metal, a transition metal, a three-way catalyst, a promoter exemplified by cerium (Ce) and/or zirconium (Zr) oxide, or a hydrocarbon (HC) adsorbent. More specifically, examples of the noble metal include platinum (Pt), palladium (Pd), rhodium (Rh), gold (Au), and silver (Ag). Examples of the transition metal contained in the catalyst include Mn, Fe, Co, Ni, Cu, Zn, Sc, Ti, V, and Cr. Examples of the rare-earth metal include Sm, Gd, Nd, Y, La, and Pr. Examples of the alkaline-earth metal include Mg, Ca, Sr, and Ba. Among these, platinum and palladium are more preferred. The noble metal, the transition metal, or the promoter may be supported by a carrier having a large specific surface area. Examples of the carrier include alumina, silica, silica alumina, and zeolite. The honeycomb filter 20 containing a catalyst for promoting PM combustion can more easily remove PM trapped on the trapping layer 24. The honeycomb filter 20 containing a catalyst for oxidizing unburned gases or a catalyst for decomposing NOₓ can more highly purify an exhaust gas.

In accordance with the honeycomb filter of the present embodiment described above, the thicknesses of the trapping layers 24a between large-small cells and the trapping layers 24b between large-large cells are optimized to decrease the pressure loss and improve the durability of the trapping layers. This will be explained below in more detail. For example, in regeneration treatment to remove PM deposits by combustion, when an engine runs at a low speed or idles during regeneration, abnormal combustion within a honeycomb filter may cause a crack in a trapping layer because of thermal stress generated by abnormal PM combustion. For example, the inlet temperature of a honeycomb filter installed under a vehicle floor is difficult to increase, and PM may be deposited beyond expectation. In particular, in the case of unsteady operating conditions with frequent low-speed operations, excess PM may be deposited beyond expectation. This may result in cracking. In the case that the inlet cells have a larger structure than the outlet cells, it is believed that PM combustion stress is placed on a corner of an inlet cell and is concentrated on a partition between large-large cells and a trapping layer disposed on the partition. Stress concentration may cause a crack in the trapping layer disposed on the partition. The crack may cause a portion of the trapping layer to be detached, affecting PM trap. This is caused by tensile stress generated on the top surface (inlet cell side) of the trapping layer. In the honeycomb filter 20 according to the present embodiment, the thickness of a trapping layer between large-large cells is decreased to reduce thermal stress in PM combustion, thereby preventing the trapping layer from being detached.

The present invention is not limited to the embodiments described above and can be implemented in various aspects within the scope of the present invention.

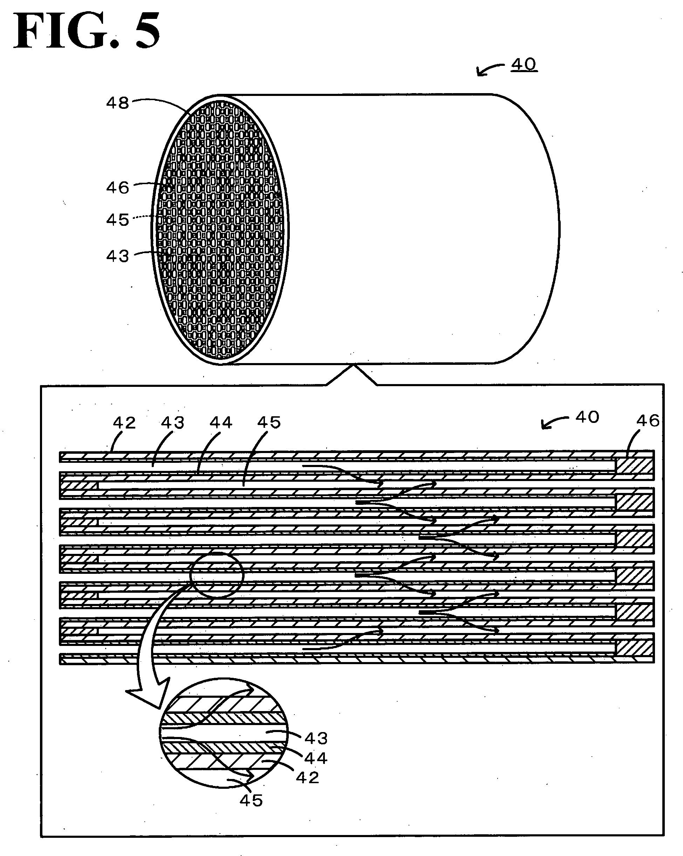

Although the honeycomb segments 21 are joined together with the bonding layer 27 in the honeycomb filter 20 according to the present embodiment, an integrally molded honeycomb filter 40 as illustrated in Fig. 5 is also suitable. In the honeycomb filter 40, partition portions 42, large cells 43, trapping layers 44, small cells 45, and sealing portions 46 may be the same as the partition portions 22, the large cells 23, the trapping layers 24, the small cells 25, and the sealing portions 26 of the honeycomb filter 20. The honeycomb filter 40 can also have decreased pressure loss and have a trapping layer having improved durability.

Although the honeycomb filter 20 contains a catalyst in the present embodiment, any honeycomb filter that can filter out substances to be removed in a fluid is suitable. The honeycomb filter 20 may contain no catalyst. Although the honeycomb filter 20 can trap PM contained in an exhaust gas, any honeycomb filter that can trap and remove solid components contained in a fluid is suitable. Also suitable are honeycomb filters for use in engines of construction equipment and honeycomb filters for use in factories and power plants.

### EXAMPLES

Specific examples of the manufacture of a honeycomb filter will be described below.

### Manufacture of Honeycomb Filter

A SiC powder and a metallic Si powder were mixed at a mass ratio of 80:20. The mixture was kneaded with methylcellulose, hydroxypropoxylmethylcellulose, a surfactant, and water to prepare a plastic pug. The pug was extruded through a die to form a honeycomb segment formed product having a desired shape. More specifically, the large cells were octagonal, the small cells were tetragonal, and the thickness of a partition between a large cell and a small cell, that is, the partition thickness A between large-small cells, the thickness of a partition between a large cell and another large cell, that is, the partition thickness B between large-large cells, the length between a large cell and another large cell, that is, the length C between large-large cells, and the width ratio of large cells/small cells were set at the values described below. The honeycomb segment had a cross section of 35 mm x 35 mm and a length of 152 mm. The honeycomb segment formed product was dried using a microwave and then with hot air, was sealed, was calcined in an oxidizing atmosphere at 550°C for three hours, and was baked in an inert atmosphere at 1400°C for two hours. The sealing portions were formed by masking alternate cell openings in one end face of the segment formed product and immersing the masked end face in a sealing slurry containing a SiC raw material, thereby alternately forming openings and sealing portions. The other end face was then masked in the same manner. The sealing portions were formed such that a cell that was open at one end and closed at the other end and a cell that was closed at one end and open at the other end were alternately disposed. Air containing SiC particles having an average particle size smaller than the average pore size of the partition was introduced from open ends of the honeycomb segment fired product on the exhaust gas inlet side while drawn in by suction from the outlet side of the honeycomb segments. The SiC particles were deposited on the surface layer of the partition on the exhaust gas inlet side. The trapping layers were formed on the partition portions through thickness distribution treatment described below such that the trapping layer thickness E between large-large cells was smaller than the trapping layer thickness D between large-small cells. Heat treatment in the atmosphere at 1300°C for two hours was performed to join the SiC particles deposited on the surface layer of the partition together and the deposited SiC particles and SiC and Si particles constituting the partition together. Thus, honeycomb segments were formed in which the trapping layer was formed on the partition portion. A binder slurry prepared by kneading alumina silicate fiber, colloidal silica, poly(vinyl alcohol), silicon carbide, and water was applied to a side surface of each of the honeycomb segments thus formed. The honeycomb segments were assembled and pressed against each other and were heat-dried to form a tetragonal honeycomb segment assembly. The honeycomb segment assembly was cylindrically ground. A coating slurry composed of the same materials as the binder slurry was then applied to the honeycomb segment assembly and was hardened by drying to manufacture a cylindrical honeycomb filter having a desired shape, segment shape, and cell structure. The honeycomb filter had a cross section diameter of 144 mm and a length of 152 mm. In Examples 1 to 15 and Comparative Examples 1 to 6 described below, the porosity of the partition portion was 40% by volume, the average pore size was 15 µm, and the average size of particles forming the trapping layer was 2.0 µm. The porosity and the average pore size of the partition portion were measured with a mercury porosimeter (Auto Pore III 9405 manufactured by Micromeritics). The average particle size of the raw material particles of the trapping layer is the median size (D50) measured with a laser diffraction/scattering particle size distribution analyzer (LA-910 manufactured by Horiba, Ltd.) using water as a dispersion medium.

### Thickness Distribution Treatment of Trapping Layer

After the honeycomb segments thus formed were allowed to absorb sufficient water, water remaining on the partition portions because of surface tension and water remaining in partition pores in which the trapping layers were to be formed were removed using air blow. Although water absorbed in the partitions between large-small cells could be removed using air blow, water absorbed in the partitions between large-large cells mostly remained because little air passed through the partitions. With a gradual increase in air blow pressure, however, water absorbed in the partitions between large-large cells could also be gradually removed. The formation of the trapping layers in the honeycomb segment while water remained in the partitions between large-large cells can control the thickness of the trapping layers on the partitions between large-large cells. The air blow pressure was controlled in the range of 0.2 to 0.8 MPa to control the thickness of the trapping layers formed on the partitions between large-large cells.

### Catalyst Loading

Raw materials of alumina:platinum:ceria-based material = 7:0.5:2.5 based on the weight ratio, in which the ceria-based material was Ce:Zr:Pr:Y:Mn = 60:20:10:5:5 based on the weight ratio, were mixed to prepare an aqueous catalyst slurry. The outlet end face (exhaust gas outlet side) of the honeycomb structure was immersed in the catalyst slurry up to a predetermined height. The catalyst slurry was drawn in by suction from the inlet end face (exhaust gas inlet side) at a predetermined suction pressure and suction flow rate for a predetermined time to allow the catalyst to be loaded on the partition, was dried at 120°C for two hours, and was baked at 550°C for one hour. The amount of catalyst per unit volume of honeycomb filter was 30 g/L.

### EXAMPLES 1 TO 4

With respect to the conditions for fabricating a honeycomb filter, the partition thickness A between large-small cells was 305 µm, the partition thickness B between large-large cells was 305 µm, the length C between large-large cells was 657 µm, and the width ratio of large cells/small cells was 1.3. Thickness distribution treatment of trapping layers was performed such that the trapping layer thickness D between large-small cells was 40 µm and the trapping layer thickness E between large-large cells was 24 µm. A honeycomb filter thus fabricated was referred to as Example 1. A honeycomb filter according to Example 2 was fabricated by the same process as in Example 1 except that the trapping layer thickness E between large-large cells was 26 µm. A honeycomb filter according to Example 3 was fabricated by the same process as in Example 1 except that the trapping layer thickness E between large-large cells was 28 µm. A honeycomb filter according to Example 4 was fabricated by the same process as in Example 1 except that the trapping layer thickness E between large-large cells was 32 µm. A honeycomb filter according to Example 5 was fabricated by the same process as in Example 1 except that the trapping layer thickness E between large-large cells was 36 µm. A honeycomb filter according to Example 6 was fabricated by the same process as in Example 1 except that the trapping layer thickness E between large-large cells was 38 µm. In Examples 1 to 6 and Comparative Examples 1 and 2 described below, the partition thickness ratio (B/A) of the partition thickness B between large-large cells to the partition thickness A between large-small cells was 1.00, and the width ratio of large cells/small cells was 1.3.

### COMPARATIVE EXAMPLES 1,AND 2

A honeycomb filter according to Comparative Example 1 was fabricated by the same process as in Example 1 except that the trapping layer thickness E between large-large cells was 22 µm. A honeycomb filter according to Comparative Example 2 was fabricated by the same process as in Example 1 except that the trapping layer thickness E between large-large cells was 39 µm.

### EXAMPLES 7 TO 10

With respect to the conditions for fabricating a honeycomb filter, the partition thickness A between large-small cells was 305 µm, the partition thickness B between large-large cells was 305 µm, the length C between large-large cells was 770 µm, and the width ratio of large cells/small cells was 1.5. Thickness distribution treatment of trapping layers was performed such that the trapping layer thickness D between large-small cells was 40 µm and the trapping layer thickness E between large-large cells was 24 µm. A honeycomb filter thus fabricated was referred to as Example 7. A honeycomb filter according to Example 8 was fabricated by the same process as in Example 7 except that the trapping layer thickness E between large-large cells was 32 µm. A honeycomb filter according to Example 9 was fabricated by the same process as in Example 7 except that the trapping layer thickness E between large-large cells was 36 µm. A honeycomb filter according to Example 10 was fabricated by the same process as in Example 7 except that the trapping layer thickness E between large-large cells was 38 µm. In Examples 7 to 10 and Comparative Examples 3 and 4 described below, the width ratio of large cells/small cells was 1.5.

### COMPARATIVE EXAMPLES 3 AND 4

A honeycomb filter according to Comparative Example 3 was fabricated by the same process as in Example 7 except that the trapping layer thickness E between large-large cells was 22 µm. A honeycomb filter according to Comparative Example 4 was fabricated by the same process as in Example 7 except that the trapping layer thickness E between large-large cells was 39 µm.

### EXAMPLES 11 TO 15

With respect to the conditions for fabricating a honeycomb filter, the partition thickness A between large-small cells was 305 µm, the partition thickness B between large-large cells was 335 µm, the length C between large-large cells was 657 µm, the partition thickness ratio (B/A) was 1.10, and the width ratio of large cells/small cells was 1.3. Thickness distribution treatment of trapping layers was performed such that the trapping layer thickness D between large-small cells was 40 µm and the trapping layer thickness E between large-large cells was 32 µm. A honeycomb filter thus fabricated was referred to as Example 11. A honeycomb filter according to Example 12 was fabricated by the same process as in Example 11 except that the partition thickness B between large-large cells was 366 µm and the partition thickness ratio (B/A) was 1.20. A honeycomb filter according to Example 13 was fabricated by the same process as in Example 11 except that the partition thickness B between large-large cells was 427 µm and the partition thickness ratio (B/A) was 1.40. A honeycomb filter according to Example 14 was fabricated by the same process as in Example 11 except that the partition thickness B between large-large cells was 488 µm and the partition thickness ratio (B/A) was 1.60. A honeycomb filter according to Example 15 was fabricated by the same process as in Example 11 except that the partition thickness B between large-large cells was 549 µm and the partition thickness ratio (B/A) was 1.80.

### EXAMPLE 16 AND COMPARATIVE EXAMPLE 5

A honeycomb filter according to Example 16 was fabricated by the same process as in Example 11 except that the partition thickness B between large-large cells was 332 µm and the partition thickness ratio (B/A) was 1.09. A honeycomb filter according to Comparative Example 5 was fabricated by the same process as in Example 11 except that the partition thickness B between large-large cells was 610 µm and the partition thickness ratio (B/A) was 2.00.

### Measurement of Thickness of Trapping Layer Based on SEM Observation

SEM images of cross sections of Examples 1 to 16 and Comparative Examples 1 to 5 were obtained with a scanning electron microscope (S-3200N manufactured by Hitachi High-Technologies Corp.), and the thicknesses of the trapping layer between large-small cells and the trapping layer between large-large cells were measured. The thickness of particle groups constituting the trapping layer was determined by embedding a partition substrate of the honeycomb filter in a resin and polishing the resin to prepare a sample, observing the sample with SEM, and analyzing an image obtained. The measuring points were five points in a central area of a cross section 15 mm upstream from the outlet end face of the honeycomb filter (see Fig. 4). The thickness of a trapping layer between large-small cells was a mean value of five measurements on each side at evenly spaced intervals. The thickness of a trapping layer between large-large cells was a mean value of measurements at the center of each side. In the image obtained, the contour of the partition, that is, a projector along the contour of partition asperities (the outermost contour of the partition) obtained by irradiating the partition surface with light in the direction perpendicular to the partition surface was drawn to determine the average line of the outermost contour of the partition. The average line was considered to be the standard reference line of the partition. Likewise, in the image obtained, the contour of the particle groups constituting the trapping layer, that is, a projector along the contour of asperities of the particle groups (the outermost contour of the particle groups) obtained by irradiating the trapping layer with light in the direction perpendicular to the partition surface was drawn to determine the average line of the outermost contour of the particle groups. The average line was considered to be the average height of the particle groups. The difference between the average height of the particle groups and the standard reference line of the partition was considered to be the thickness of the trapping layer.

### Regeneration Threshold Test (Threshold Test for Trapping Layer Crack)

The generation of cracks in abnormal combustion resulting from excess PM deposition was tested. The amount of PM deposition that resulted in a defect in the trapping layer after regeneration treatment to remove an excessive amount of PM by combustion, in other words, the amount of PM deposition that resulted in decreased PM trapping efficiency after the regeneration treatment was defined as a "regeneration threshold", and the regeneration threshold was measured. After a predetermined amount of PM was deposited in a steady state at 3000 rpm and 50 Nm, the test was performed in the following PM abnormal combustion mode in which the honeycomb filter had the highest internal temperature. First, while a 2.0-L diesel engine was controlled in a steady state at 3000 rpm and 50 Nm, the inlet gas temperature of the filter was increased to 650°C by post-injection to burn PM. On the assumption that a vehicle was stopped when the pressure loss measured in front and in the rear of the honeycomb filter began to decrease, the post-injection was stopped, and the engine idled. This rapidly increases the concentration of oxygen entering the honeycomb filter and causes abnormal combustion of PM deposited in the honeycomb filter. In the case of cracking or detachment of the trapping layer, PM trap ability declines because of the leakage of PM through the defect. Thus, trapping efficiency after regeneration treatment was compared with trapping efficiency before regeneration treatment. The trapping efficiency was calculated from the reduction ratio of the PM concentration measured downstream of the honeycomb filter to the PM concentration measured upstream of the honeycomb filter. The PM concentration was measured with a scanning mobility particle sizer (SMPS). The amount of PM deposited in the PM abnormal combustion mode test was increased in increments of 0.5 g/L. The amount of PM deposition that resulted in decreased trapping efficiency in the test was considered to be the regeneration threshold value of the honeycomb filter.

### Pressure Loss Test

The honeycomb filter thus fabricated was installed in a 2.0-L diesel engine. While PM was deposited in a steady state at an engine speed of 3000 rpm and a torque of 50 Nm, the pressure loss behavior was observed. The amount of PM deposits in the test was calculated by subtracting the weight of the honeycomb filter before the engine test from the weight of the honeycomb filter after the engine test. The pressure loss in relation to the amount of PM deposits was determined on the assumption that PM was generated at a constant rate. The pressure loss at a PM deposition of 8 g/L, which was close to a common regeneration threshold set-point, was used for the performance evaluation of the honeycomb filter.

### Experimental Results

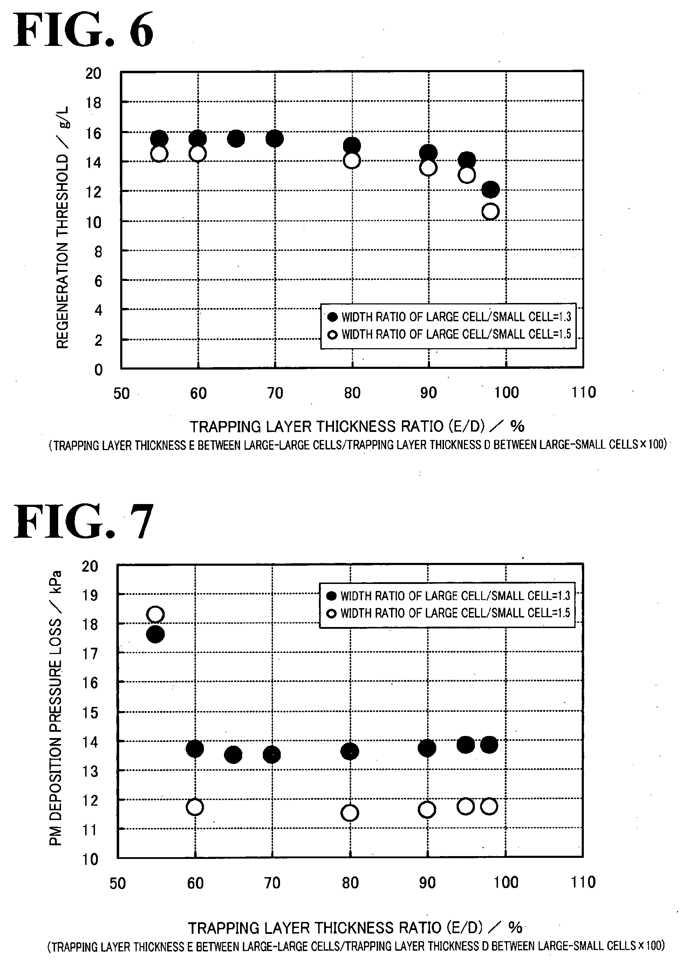

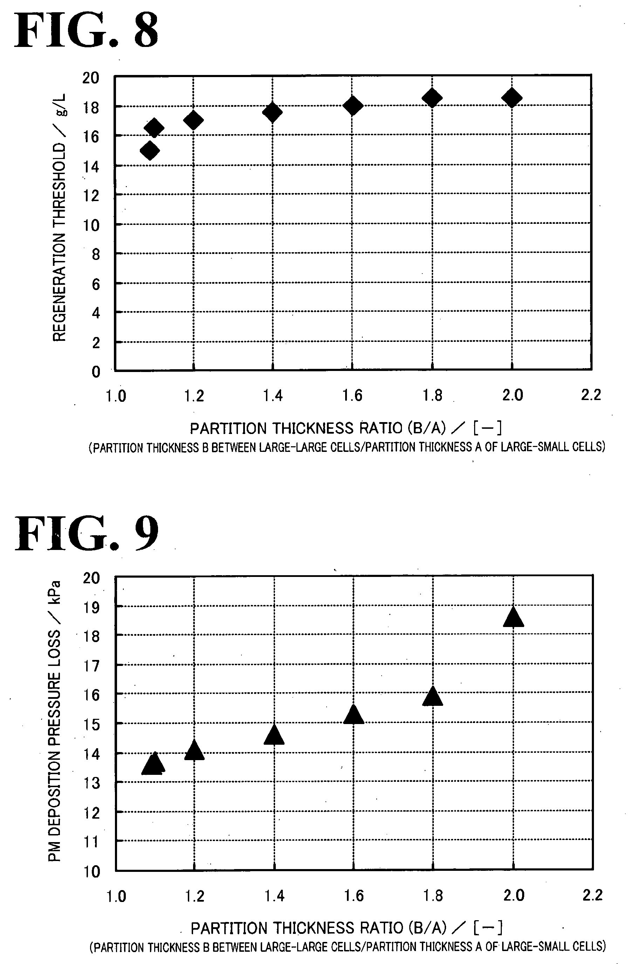

Table 1 summarizes the cell structures and evaluation results for Examples 1 to 16 and ComparativeExamples 1 to 5. Fig. 6 shows the measurements of regeneration threshold (g/L) as a function of the trapping layer thickness ratio E/D (%) of the trapping layer thickness E between large-large cells to the trapping layer thickness D between large-small cells. Fig. 7 shows the measurements of PM deposition pressure loss (kPa) as a function of the trapping layer thickness ratio E/D (%) of the trapping layer thickness E between large-large cells to the trapping layer thickness D between large-small cells. Fig. 8 shows the measurements of regeneration threshold (g/L) as a function of the partition thickness ratio B/A (-) of the partition thickness B between large-large cells to the partition thickness A between large-small cells. Fig. 9 shows the measurements of PM deposition pressure loss (kPa) as a function of the partition thickness ratio B/A (-) of the partition thickness B between large-large cells to the partition thickness A between large-small cells. As illustrated in Fig. 6, in the regeneration threshold test with an unusually excessive amount of PM, a trapping layer thickness ratio E/D of more than 95% resulted in a decreased regeneration threshold value of 12 g/L or less. It was surmised that a trapping layer formed on a partition had a defect. As illustrated in Fig. 7, in the vicinity of the regeneration threshold value, a trapping layer thickness ratio E/D of less than 60% resulted in markedly increased pressure loss. Thus, it was found that the trapping layer thickness ratio E/D (%) of the trapping layer thickness E between large-large cells to the trapping layer thickness D between large-small cells is preferably 60% or more and 95% or less. As illustrated in Fig. 8, a partition thickness ratio B/A of less than 1.10 resulted in a decreased regeneration threshold value. As illustrated in Fig. 9, a partition thickness ratio B/A of more than 1.80 resulted in increased pressure loss. Thus, it was found that the partition thickness ratio B/A of the partition thickness B between large-large cells to the partition thickness A between large-small cells is preferably 1.10 or more and 1.80 or less.

**Table 1**

| CELL STRUCTURE | | | | | | | | | EVALUATION RESULT | |
|---|---|---|---|---|---|---|---|---|---|---|
| SAMPLE | PARTITION THICKNESS BETWEEN LARGE SMALL CELLS (*µ*m) | PARTITION THICKNESS B BETWEEN LARGE-LARGE CELLS (*µ*m) | PARTITION THICKNESS RATIO B/A (-) | LENGTH C BETWEEN LARGE-LARGE CELLS (*µ*m) | WIDTH RATIO WIDTH RATIO OF LARGE CELL TO SMALL CELL (-) | TRAPPING LAYER THICKNESS D BETWEEN LARGE-SMALL CELLS (*µ*m) | TRAPPING LAYER THICKNESS E BETWEEN LARGE-LARGE CELLS (*µ*m) | TRAPPING LAYER THICKNESS RATIO E/D (%) | REGENERATION THRESHOLD (g/L) | PM DEPOSITION PRESSURE LOSS (kPa) |
| COMPARATIVE EXAMPLE 1 | 305 | 305 | 1.00 | 657 | 1.3 | 40 | 22 | 55 | 15.5 | 17.6 |
| EXAMPLE 1 | 305 | 305 | 1.00 | 657 | 1.3 | 40 | 24 | 60 | 15.5 | 13.7 |
| EXAMPLE 2 | 305 | 305 | 1.00 | 657 | 1.3 | 40 | 26 | 65 | 15.5 | 13.5 |
| EXAMPLE 3 | 305 | 305 | 1.00 | 657 | 1.3 | 40 | 28 | 70 | 15.5 | 13.5 |
| EXAMPLE 4 | 305 | 305 | 1.00 | 657 | 1.3 | 40 | 32 | 80 | 15.0 | 13.6 |
| EXAMPLE 5 | 305 | 305 | 1.00 | 657 | 1.3 | 40 | 36 | 90 | 14.5 | 13.7 |
| EXAMPLE 6 | 305 | 305 | 1.00 | 657 | 1.3 | 40 | 38 | 95 | 14.0 | 13.8 |
| COMPARATIVE EXAMPLE 2 | 305 | 305 | 1.00 | 657 | 1.3 | 40 | 39 | 98 | 12.0 | 13.8 |
| COMPARATIVE EXAMPLE 3 | 305 | 305 | 1.00 | 770 | 1.5 | 40 | 22 | 55 | 14.5 | 18.3 |
| EXAMPLE 7 | 305 | 305 | 1.00 | 770 | 1.5 | 40 | 24 | 60 | 14.5 | 11.7 |
| EXAMPLE 8 | 305 | 305 | 1.00 | 770 | 1.5 | 40 | 32 | 80 | 14.0 | 11.5 |
| EXAMPLE 9 | 305 | 305 | 1.00 | 770 | 1.5 | 40 | 36 | 90 | 13.5 | 11.6 |
| EXAMPLE 10 | 305 | 305 | 1.00 | 770 | 1.5 | 40 | 38 | 95 | 13.0 | 11.7 |
| COMPARATIVE EXAMPLE 4 | 305 | 305 | 1.00 | 770 | 1.5 | 40 | 39 | 98 | 10.5 | 11.7 |
| EXAMPLE 16 | 305 | 332 | 1.09 | 657 | 1.3 | 40 | 32 | 80 | 15.0 | 13.6 |
| EXAMPLE 11 | 305 | 335 | 1.10 | 657 | 1.3 | 40 | 32 | 80 | 16.5 | 13.7 |
| EXAMPLE 12 | 305 | 366 | 1.20 | 657 | 1.3 | 40 | 32 | 80 | 17.0 | 14.1 |
| EXAMPLE 13 | 305 | 427 | 1.40 | 657 | 1.3 | 40 | 32 | 80 | 17.5 | 14.6 |
| EXAMPLE 14 | 305 | 488 | 1.60 | 657 | 1.3 | 40 | 32 | 80 | 18.0 | 15.3 |
| EXAMPLE 15 | 305 | 549 | 1.80 | 657 | 1.3 | 40 | 32 | 80 | 18.5 | 15.9 |
| COMPARATIVE EXAMPLE 5 | 305 | 610 | 2.00 | 657 | 1.3 | 40 | 32 | 80 | 18.5 | 18.6 |

### Industrial Applicability

The present invention can suitably be applied to filters for purifying exhaust gases emitted from automobile engines, stationary engines for construction equipment, industrial stationary engines, and combustion equipment.

## Claims

1. A honeycomb filter (20), comprising:
a plurality of porous partition portions (22) disposed between a large cell (23) and another large cell (23) and between a large cell (23) and a small cell (25), the small cell (25) being open at one end and closed at the other end and serving as a flow path of a fluid, the large cells (23) being closed at one end and open at the other end and having a larger opening area than the small cell (25), the partition portions (22) being formed such that the large cells (23) and the small cells (25) are alternately disposed; and
a trapping layer (24) for trapping and removing solid components contained in the fluid, the trapping layer (24) being disposed on each of the partition portions (22) and containing particle groups having an average particle size smaller than the average pore size of a corresponding one of the partition portions (22),
wherein the thickness of a trapping layer (24) disposed on a partition portion (22) between a large cell (23) and another large cell (23) is 60% or more and 95% or less of the thickness of a trapping layer (24) disposed on a partition portion (22) between a large cell (23) and a small cell (25), and the partition thickness ratio of the thickness of a partition portion (22) between a large cell (23) and another large cell (23) to the thickness of a partition portion (22) between a large cell (23) and a small cell (25) is 1.0 or more and 1.8 or less.

2. The honeycomb filter (20) according to Claim 1, wherein the thickness of the trapping layer (24) disposed on a partition portion (22) between a large cell (23) and a small cell (25) is 10 µm or more and 80 µm or less.

3. The honeycomb filter (20) according to Claim 1 or 2, wherein the thickness of the trapping layer (24) disposed on a partition portion (22) between a large cell (23) and another large cell (23) is 80% or more and 95% or less of the thickness of the trapping layer (24) disposed on a partition portion (22) between a large cell (23) and a small cell (25).

4. The honeycomb filter (20) according to any one of Claims 1 to 3, wherein the cell width ratio of the width of a large cell (23) to the width of a small cell (25) is 1.2 or more and 2.0 or less.

5. The honeycomb filter (20) according to any one of Claims 1 to 4, wherein the trapping layers (24) are formed by supplying an inorganic material that is a raw material for the trapping layers (24) to the large cells (23) using a gas as a transport medium.

6. The honeycomb filter (20) according to any one of Claims 1 to 5, wherein the partition portions (22) contain one or more inorganic materials selected from cordierite, SiC, mullite, aluminum titanate, alumina, silicon nitride, SIALON, zirconium phosphate, zirconia, titania, and silica.

7. The honeycomb filter (20) according to any one of Claims 1 to 6, wherein the trapping layers (24) contain one or more inorganic materials selected from cordierite, SiC, mullite, aluminum titanate, alumina, silicon nitride, SIALON, zirconium phosphate, zirconia, titania, and silica.

8. The honeycomb filter (20) according to any one of Claims 1 to 7, wherein the honeycomb filter (20) is formed by joining two or more honeycomb segments (21) with a bonding layer (27), each of the honeycomb segments (21) having the partition portion (20) and the trapping layer (24).

9. The honeycomb filter (20) according to any one of Claims 1 to 8, wherein the partition portions (22) or the trapping layers (24) or both are loaded with a catalyst.

10. The honeycomb filter (20) according to any one of Claims 1 to 9, wherein the large cells (23) have an octagonal cross section perpendicular to the fluid flow direction, and the small cells (25) have a tetragonal cross section perpendicular to the fluid flow direction.

## Patentansprüche

1. Wabenfilter (20) umfassend:
eine Vielzahl poröser Trennabschnitte (22), die zwischen einer großen Zelle (23) und einer weiteren großen Zelle (23) und zwischen einer großen Zelle (23) und einer kleinen Zelle (25) angeordnet sind, wobei die kleine Zelle (25) an einem Ende geöffnet und am anderen Ende verschlossen ist und als Strömungspfad eines Fluids dient, wobei die großen Zellen (23) an einem Ende verschlossen und am anderen Ende geöffnet sind und einen größeren Öffnungsbereich als die kleine Zelle (25) aufweisen, wobei die Trennabschnitte (22) derart ausgebildet sind, dass die großen Zellen (23) und die kleinen Zellen (25) abwechselnd angeordnet sind; und
eine Einfangschicht (24) zum Einfangen und Entfernen fester Komponenten, die im Fluid enthalten sind, wobei die Einfangschicht (24) auf jedem der Trennabschnitte (22) angeordnet ist und Teilchengruppen umfassen, deren mittlere Teilchengröße kleiner als die mittlere Teilchengröße einer entsprechenden der Trennabschnitte (22);
wobei die Dicke einer Einfangschicht (24), die auf einem Trennabschnitt (22) zwischen einer großen Zelle (23) und einer weiteren großen Zelle (23) angeordnet ist, 60 % oder mehr und 95 % oder weniger der Dicke einer Einfangschicht (24), die auf einem Trennabschnitt (22) zwischen einer großen Zelle (23) und einer kleinen Zelle (25) angeordnet ist, beträgt, und wobei das Trenndickenverhältnis der Dicke eines Trennabschnitts (22) zwischen einer großen Zelle (23) und einer weiteren großen Zelle (23) zur Dicke eines Trennabschnitts (22) zwischen einer großen Zelle (23) und einer kleinen Zelle (25) 1,0 oder mehr und 1,8 oder weniger beträgt.

2. Wabenfilter (20) nach Anspruch 1, wobei die Dicke der Einfangschicht (24), die auf einem Trennabschnitt (22) zwischen einer großen Zelle (23) und einer kleinen Zelle (25) angeordnet ist, 10 µm oder mehr und 80 µm oder weniger beträgt.

3. Wabenfilter (20) nach Anspruch 1 oder 2, wobei die Dicke der Einfangschicht (24), die auf einem Trennabschnitt (22) zwischen einer großen Zelle (23) und einer weiteren großen Zelle (23) angeordnet ist, 80 % oder mehr und 95 % oder weniger als die Dicke der Einfangschicht (24), die auf einem Trennabschnitt (22) zwischen einer großen Zelle (23) und einer kleinen Zelle (25) angeordnet ist, beträgt.

4. Wabenfilter (20) nach einem der Ansprüche 1 bis 3, wobei das Zellbreitenverhältnis der Breite einer großen Zelle (23) zur Breite einer kleinen Zelle (25) 1,2 oder mehr oder 2,0 oder weniger beträgt.

5. Wabenfilter (20) nach einem der Ansprüche 1 bis 4, wobei die Einfangschichten (24) durch Zuführen eines anorganischen Materials, das ein Rohmaterial für die Einfangschichten (24) ist, zu den großen Zellen (23) unter Verwendung eines Gases als Transportmedium ausgebildet sind.

6. Wabenfilter (20) nach einem der Ansprüche 1 bis 5, wobei die Trennabschnitte (22) eines oder mehrere anorganische Materialien ausgewählt aus Kordierit, SiC, Mullit, Aluminiumtitanat, Aluminiumoxid, Siliziumnitrid, SIALON, Zirkoniumphosphat, Zirkonium, Titanoxid und Siliziumoxid umfassen.

7. Wabenfilter (20) nach einem der Ansprüche 1 bis 6, wobei die Einfangschichten (24) eines oder mehrere anorganische Materialien ausgewählt aus Kordierit, SiC, Mullit, Aluminiumtitanat, Aluminiumoxid, Siliziumnitrid, SIALON, Zirkoniumphosphat, Zirkonium, Titanoxid und Siliziumoxid umfassen.

8. Wabenfilter (20) nach einem der Ansprüche 1 bis 7, wobei der Wabenfilter (20) durch Verbinden von zwei oder mehreren Wabensegmenten (21) mit einer Haftmittelschicht (27) ausgebildet ist, wobei jedes der Wabensegmente (21) den Trennabschnitt (20) und die Einfangschicht (24) aufweist.

9. Wabenfilter (20) nach einem der Ansprüche 1 bis 8, wobei die Trennabschnitte (22) oder die Einfangschichten (24) beide mit einem Katalysator beladen sind.

10. Wabenfilter (20) nach einem der Ansprüche 1 bis 9, wobei die großen Zellen (23) einen oktogonalen Querschnitt senkrecht zur Fluidströmungsrichtung aufweisen und wobei die kleinen Zellen (25) einen tetragonalen Querschnitt senkrecht zur Fluidströmungsrichtung aufweisen.

## Revendications

1. Filtre en nid d'abeilles (20), comprenant :
une pluralité de parties de séparation poreuses (22) disposées entre une grande cellule (23) et une autre grande cellule (23) et entre une grande cellule (23) et une petite cellule (25), la petite cellule (25) étant ouverte sur une extrémité et fermée sur l'autre extrémité et servant de trajet d'écoulement pour un fluide, les grandes cellules (23) étant fermées sur une extrémité et ouvertes sur l'autre extrémité et ayant une plus grande surface d'ouverture que la petite cellule (25), les parties de séparation (22) étant formées de telle sorte que les grandes cellules (23) et les petites cellules (25) sont disposées de manière alternée ; et
une couche d'emprisonnement (24) pour emprisonner et retirer des composants solides contenus dans le fluide, la couche d'emprisonnement (24) étant disposée sur chacune des parties de séparation (22) et contenant des groupes de particules ayant une taille moyenne de particules inférieure à la taille moyenne de pores d'une partie correspondante des parties de séparation (22),
dans lequel l'épaisseur d'une couche d'emprisonnement (24) disposée sur une partie de séparation (22) située entre une grande cellule (23) et une autre grande cellule (23) est comprise entre 60 % et 95 % de l'épaisseur d'une couche d'emprisonnement (24) disposée sur une portion de séparation (22) située entre une grande cellule (23) et une petite cellule (25), et le rapport d'épaisseur de séparation entre l'épaisseur d'une partie de séparation (22) située entre une grande cellule (23) et une autre grande cellule (23) et l'épaisseur d'une partie de séparation (22) située entre une grande cellule (23) et une petite cellule (25) est compris entre 1,0 et 1,8.

2. Filtre en nid d'abeilles (20) selon la revendication 1, dans lequel l'épaisseur de la couche d'emprisonnement (24) disposée sur une partie de séparation (22) située entre une grande cellule (23) et une petite cellule (25) est comprise entre 10 µm et 80 µm.

3. Filtre en nid d'abeilles (20) selon la revendication 1 ou 2, dans lequel l'épaisseur de la couche d'emprisonnement (24) disposée sur une partie de séparation (22) située entre une grande cellule (23) et une autre grande cellule (23) est comprise entre 80 % et 95 % de l'épaisseur de la couche d'emprisonnement (24) disposée sur une partie de séparation (22) située entre une grande cellule (23) et une petite cellule (25).

4. Filtre en nid d'abeilles (20) selon l'une quelconque des revendications 1 à 3, dans lequel le rapport de largeur de cellules entre la largeur d'une grande cellule (23) et la largeur d'une petite cellule (25) est compris entre 1,2 et 2,0.

5. Filtre en nid d'abeilles (20) selon l'une quelconque des revendications 1 à 4, dans lequel les couches d'emprisonnement (24) sont formées en appliquant une matière inorganique qui est une matière brute pour les couches d'emprisonnement (24) sur les grandes cellules (23) en utilisant un gaz comme milieu de transport.

6. Filtre en nid d'abeilles (20) selon l'une quelconque des revendications 1 à 5, dans lequel les parties de séparation (22) contiennent une ou plusieurs matières inorganiques choisies parmi la cordiérite, SiC, mullite, titanate d'aluminium, alumine, nitrure de silicium, SIALON, phosphate de zirconium, zircone, dioxyde de titane et silice.

7. Filtre en nid d'abeilles (20) selon l'une quelconque des revendications 1 à 6, dans lequel les couches d'emprisonnement (24) contiennent une ou plusieurs matières inorganiques choisies parmi la cordiérite, SiC, mullite, titanate d'aluminium, alumine, nitrure de silicium, SIALON, phosphate de zirconium, zircone, dioxyde de titane et silice.

8. Filtre en nid d'abeilles (20) selon l'une quelconque des revendications 1 à 7, dans lequel le filtre en nid d'abeilles (20) est formé en assemblant deux ou plus de deux segments en nid d'abeilles (21) à l'aide d'une couche de liaison (27), chacun des segments en nid d'abeilles (21) ayant la partie de séparation (20) et la couche d'emprisonnement (24).

9. Filtre en nid d'abeilles (20) selon l'une quelconque des revendications 1 à 8, dans lequel les parties de séparation (22) ou les couches d'emprisonnement (24), ou les deux, sont chargées d'un catalyseur.

10. Filtre en nid d'abeilles (20) selon l'une quelconque des revendications 1 à 9, dans lequel les grandes cellules (23) ont une section transversale octogonale perpendiculaire à la direction d'écoulement du fluide, et les petites cellules (25) ont une section transversale tétragonale perpendiculaire à la direction d'écoulement du fluide.
